# EUROPÄISCHE PATENTSCHRIFT

(11) **EP 1 574 408 B1**
(45) Veröffentlichungstag und Bekanntmachung des Hinweises auf die Patenterteilung: **10.10.2007**
(21) Anmeldenummer: 05004769.5
(22) Anmeldetag: 04.03.2005
(51) Int. Cl.: B60R 25/10, B60Q 3/02

(54) **Innenleuchte mit Innenraumüberwachungsvorrichtung**
Interior light with interior surveillance device
Eclairage intérieur avec dispositif de surveillance intérieure

(30) Priorität: 12.03.2004 DE 102004012605
(43) Veröffentlichungstag der Anmeldung: 14.09.2005
(73) Patentinhaber: Hella KGaA Hueck & Co., 59552 Lippstadt (DE)
(72) Erfinder: Kirchhoff, Friedhelm, Dipl.-Ing., 59597 Erwitte-Ebbinghausen (DE); Nachtigall, Klaus, Dipl.-Ing., 79199 Kirchzarten (DE); Lécallier, Yves, 79199 Kirchzarten (DE); Heinrich, Jürgen, Dipl.-Ing., 79199 Kirchzarten (DE)
(74) Vertreter: Huwer, Andreas

(56) Entgegenhaltungen:
- EP-A- 1 273 494
- DE-A1- 4 417 710
- DE-A1- 10 024 215
- PATENT ABSTRACTS OF JAPAN Bd. 2002, Nr. 06, 4. Juni 2002 (2002-06-04) & JP 2002 037030 A (YAZAKI CORP), 6. Februar 2002 (2002-02-06)

## Beschreibung

Die Erfindung betrifft eine Innenleuchte mit einer Innenraumüberwachungsvorrichtung für Fahrzeuge, mit mindestens einem über eine Betätigungseinrichtung mit der Stromversorgung des Fahrzeugs verbindbaren Leuchtmittel zum Beleuchten des Fahrzeuginnenraums und wenigstens einem IR-Bewegungsmelder zum Überwachen des Fahrzeuginnenraums, wobei der IR-Bewegungsmelder einen mit einem Alarmgeber verbundenen Alarmsignalausgang und einen mit einer Verriegelungseinrichtung für den Fahrzeuginnenraum verbundenen Steuersignaleingang aufweist, über den die Innenraumüberwachungsvorrichtung zwischen einem Überwachungszustand, in dem die Ausgabe eines Alarmsignals an den Alarmsignalausgang freigegeben ist, und einem Ruhezustand, in dem die Ausgabe des Alarmsignals gesperrt ist, umschaltbar ist.

Eine derartige mit einer Innenraumüberwachungsvorrichtung kombinierte Innenleuchte für ein Kraftfahrzeug ist aus DE 44 17 710 A1 bekannt. Sie weist ein Gehäuse auf, an dem ein Leuchtmittel und ein mehrere IR-Sender und IR-Empfänger aufweisender Bewegungsmelder angeordnet sind. Mit Hilfe der IR-Sender wird der Fahrzeuginnenraum raumübergreifend bestrahlt und die aus dem Innenraum zurückreflekflerte IR-Strahlung wird mit Hilfe der IR-Empfänger detektiert. Die IR-Empfänger sind mit einer Auswerteeinrichtung verbunden, welche die empfangene Infrarotstrahlung daraufhin analysiert, ob ein Eindringen in den überwachten Fahrzeuginnenraum vorliegt. Beim Feststellen eines Eindringens wird ein Adarmsignal ausgegeben, das einen Alarmgeber aktiviert, beispielsweise eine Hupe. Außerdem werden beim Feststellen eines Eindringens wesentliche Fahrzeugkomponenten gesperrt, um einen Diebstahl des Fahrzeugs zu erschweren. Zum Verriegeln des Fahrzeuginnenraums weist das Fahrzeug eine Verriegelungseinrichtung auf, die über einen als Infrarotfernbedienung ausgebildeten elektronischen Schlüssel fernbedienbar ist. Der IR-Bewegungsmelder hat einen mit der Verriegelungseinrichtung für den Fahrzeuginnenraum verbundenen Steuersignaleingang, über den die Innenraumüberwachungsvorrichtung zwischen einem Überwachungszustand, in dem die Ausgabe eines Alarmsignals bei verriegeltem Fahrzeuginnenraum freigegeben ist, und einem Ruhezustand, in dem die Ausgabe des Alarmsignals bei unverriegeltem Innenraum gesperrt ist, umschaltbar ist. Der IR-Bewegungsmelder ist ferner über einen an dem Gehäuse angeordneten Taster mit einer vorbesfimmten Zeitverzögerung aktivierbar. Über den Taster lässt sich auch das Leuchtmittel der Innenleuchte ein- und ausschalten. Dies wird durch eine spezielle Betätigung des Tasters ermöglicht, bei der die Innenleuchte durch einfaches Betätigen des Tasters ein- und ausgeschaltet und die Innenraumüberwachungsvorrichtung durch einen Doppelklick des Tasters aktiviert wird. Die Betätigung der Innenleuchte über den Taster ist jedoch relativ umständlich. Insbesondere besteht die Gefahr, dass bei einem versehentlichen zweifachen Betätigen des Tasters unbeabsichtigt die Innenraumüberwachungsvorrichtung aktiviert und dann ein Fehlalarm ausgelöst wird. Schließlich erfordert der Taster bei der Fertigung der Innenleuchte noch einen gewissen Herstellungs- und Kostenaufwand. Ein weiterer Nachteil der Innenraumüberwachungsvorrichtung besteht darin, dass der IR-Bewegungsmelder auch für Fremdlicht empfindlich ist, insbesondere wenn die IR-Empfänger der direkten Bestrahlung mit Sonnenlicht ausgesetzt sind. Auch dadurch können Fehlalarme ausgelöst werden.

Es besteht deshalb die Aufgabe, eine Innenleuchte mit einer Innenraumüberwachungsvorrichtung der eingangs genannten Art zu schaffen, die kostengünstig herstellbar ist und auf einfache Weise ein Betätigen der Innenleuchte ermöglicht.

Diese Aufgabe wird dadurch gelöst, dass die Innenraumüberwachungsvorrichtung zumindest im Ruhezustand mit der Betätigungseinrichtung für das Leuchtmittel in Steuerverbindung steht, und dass im Ruhezustand die Detektionsreichweite des IR-Bewegungsmelders im Vergleich zum Überwachungszustand derart reduziert ist, dass der IR-Bewegungsmelder zum berührungslosen optischen Betätigen des Leuchtmittels nutzbar ist.

Der IR-Bewegungsmelder ist also auch im Ruhezustand der Innenraumüberwachungsvorrichtung aktiv, wobei die Detektionsreichweite im Vergleich zum Überwachungszustand jedoch derart reduziert ist, dass der IR-Bewegungsmelder nur solche Bewegungen detektiert, die in einem Teilbereich des Fahrzeuginnenraums stattfinden, der deutlich kleiner ist als der Überwachungsbereich. Wenn der IR-Bewegungsmelder im Ruhezustand der Innenraumüberwachungsvorrichtung in diesem Teilbereich des Fahrzeuginnenraums eine Bewegung detektiert, übermittelt sie ein entsprechendes Steuersignal an die Betätigungseinrichtung, um das Leuchtmittel ein- oder auszuschalten. In vorteilhafter Weise kann somit der IR-Bewegungsmelder doppelt genutzt werden, nämlich einerseits im Ruhezustand zum berührungslosen Betätigen der Innenleuchte und andererseits im Überwachungszustand zum Detektieren eines Eindringens in den Fahrzeuginnenraum. Ein zusätzlicher Schalter oder Taster zum Betätigen der Innenleuchte kann also eingespart werden, was eine kostengünstige Herstellung und einen einfachen Aufbau der Innenleuchte mit Innenraumüberwachungsvorrichtung ermöglicht.

Besonders vorteilhaft ist, wenn der IR-Bewegungsmelder mindestens einen HALIOS-Sensor aufweist. Ein derartiger nach dem HALIOS-Prinzip arbeitender Sensor ist als solches aus dem Aufsatz "Elektronikkonzept erfüllt Optiksensorträume" von Dr. Frank Rottmann und Dr. Egbert Spiegel, Elektronik, Heft 22 vom 29.10.2002 bekannt. In diesem Aufsatz ist eine Verwendung eines HALIOS-Sensor zur Innenraumüberwachung von Fahrzeugen jedoch nicht beschrieben. Beim HALIOS-Sensor wird das IR-Licht aus zwei unabhängigen gegenphasigen IR-Sendern von einem IR-Empfänger erfasst und so geregelt, dass ein statisches Nullsummensignal empfangen wird. Dadurch wird eine sehr gute Störunempfindlichkeit des IR-Bewegungsmelders ermöglicht. In vorteilhafter Weise können dadurch Fehlalarme der Innenraumüberwachungsvorrichtung durch Sonneneinstrahlung oder dergleichen infraroter Störstrahlung praktisch vermieden werden. Außerdem wird auch beim Auftreten von Störstrahlung ein sicheres Erkennen eines Eindringens in den Fahrzeuginnenraum bzw. ein störungsfreies Betätigen der Innenleuchte ermöglicht.

Bei einer bevorzugten Ausführungsform der Erfindung weist der HALIOS-Sensor mindestens zwei IR-Sender und wenigstens einen diesen zugeordneten IR-Empfänger auf, wobei die IR-Sender mittels einer Ansteuereinrichtung gegenphasig getaktet ansteuerbar sind, wobei die Strahlungsleistung mindestens eines IR-Senders mittels eines Stellglieds einstellbar ist, wobei das Stellglied mit dem IR-Empfänger und einem Regler in einen Regelkreis geschaltet ist, der derart ausgebildet ist, dass beim Auftreten einer Abweichung zwischen den mittleren Amplitudenwerten der den einzelnen IR-Sendern in dem Messsignal des IR-Empfängers zugeordneten Abschnitten die Ansteuerung des Stellglieds zur Kompensation der Abweichung verändert wird, wobei ein Ausgang des Regelkreises an einem ersten Eingang einer Vergleichseinrichtung angeschlossen ist, wobei an einem zweiten Eingang der Vergleichseinrichtung zum Verändern der Detektionsreichweite der Innenraumüberwachungsvorrichtung mittels einer Umschalteinrichtung unterschiedliche, dem Ruhezustand bzw. dem Überwachungszustand zugeordnete Signalpegel aufweisende Vergleichssignale anlegbar sind, und dass ein Ausgangsanschluss der Vergleichseinrichtung mit der Betätigungseinrichtung und dem Alarmgeber in Steuerverbindung steht. Die Detektionsreichweite des IR-Bewegungsmelders wird also auf einfache Weise dadurch an die dem Ruhe- bzw. Überwachungszustand zugeordneten Werte angepasst, indem der Signalpegel an dem zweiten Eingang der Vergleichseinrichtung entsprechend verändert wird.

Bei einer vorteilhaften Ausführungsform der Erfindung ist die Ansteuereinrichtung derart ausgebildet, dass die IR-Sender im Ruhezustand mit einer geringen Sendeleistung betrieben werden als im Überwachungszustand. Auch durch diese Maßnahme kann die Detektionsreichweite des IR-Bewegungsmelders auf einfache Weise an die dem Ruhe- bzw. Überwachungszustand zugeordneten Werte angepasst werden. Dabei ist im Ruhezustand die Stromaufhahme der IR-Sender gegenüber dem Überwachungszustand reduziert.

Vorteilhaft ist, wenn die Betätigungseinrichtung einen Dimmer aufweist, und wenn der Dimmer zum berührungslosen Verstellen der Helligkeit des wenigstens einen Leuchtmittels zumindest im Ruhezustand mit dem IR-Bewegungsmelder in Steuerverbindung steht vorzugsweise derart, dass die Helligkeit des Leuchtmittels in Abhängigkeit vom Abstand zwischen dem IR-Bewegungsmelder und einem innerhalb dessen Detektionsreichweite befindlichen bewegten Objekt, der Änderungsgeschwindigkeit dieses Abstands und/oder von der Verweildauer des Objekts in dem Detektionsbereich eingestellt wird. Somit kann der IR-Bewegungsmelder auch zum Einstellen der Helligkeit der Innenraumbeleuchtung verwendet werden. Dabei sind unterschiedliche Bedienungskonzepte möglich. So kann beispielsweise in der Betätigungseinrichtung eine Dimmkurve gespeichert sein, die durchlaufen wird, solange sich im Ruhezustand der Innenraumüberwachungsvorrichtung innerhalb der Detektionsreichweite des IR-Bewegungsmelders ein bewegtes Objekt, wie zum Beispiel die Hand eines Benutzers der Innenleuchte, befindet. Dabei ist es sogar möglich, dass die Richtung, in der die Dimmkurve durchlaufen wird, vom Betriebszustand des Leuchtmittels abhängig ist, d.h. die Helligkeit nimmt zu, wenn das Leuchtmittel zuvor ausgeschaltet war und sie nimmt ab, wenn das Leuchtmittel zuvor eingeschaltet war. Es ist aber auch denkbar, dass die Helligkeit des Leuchtmittels in Abhängigkeit vom Abstand zwischen dem IR-Bewegungsmelder und dem Objekt eingestellt wird. Dabei kann die Steuerung der Helligkeit in Abhängigkeit vom Ausgangssignal des Regelkreises des HALIOS-Sensors derart erfolgen, dass die Helligkeit mit abnehmendem Abstand entweder zu- oder abnimmt. Gegebenenfalls ist es sogar möglich, dass eine Veränderung der Helligkeit des Leuchtmittels nur dann erfolgt, wenn das Objekt zuvor innerhalb eines vorgegebenen Zeitfensters in dem Detektionsbereich verweilt hat, um die Veränderung der Helligkeitseinstellung zu aktivieren. Die Steuerung des Leuchtmittels kann auch in Abhängigkeit von der Änderungsgeschwindigkeit des Ausgangssignals des Regelkreises des HALIOS-Sensors und somit von der Änderungsgeschwindigkeit des Abstands zwischen dem Objekt und dem IR-Bewegungsmelder erfolgen. Dabei kann beispielsweise bei einer großen Änderungsgeschwindigkeit das Leuchtmittel ein- oder ausgeschaltet und bei einer kleineren Änderungsgeschwindigkeit gedimmt werden.

Bei einer zweckmäßigen Ausgestaltung der Erfindung sind die Ansteuereinrichtung, das Stellglied, der Regler und eine Einrichtung zur Umschaltung der Innenraumüberwachungsvorrichtung zwischen dem Ruhe- und dem Überwachungszustand in einen Halbleiterchip integriert, insbesondere in einen ASIC. Dadurch kann die Kombinationsvorrichtung, bestehend aus der Innenleuchte und der Innenraumüberwachungsvorrichtung, noch kostengünstiger hergestellt werden. Auf dem Halbleiterchip kann praktisch die gesamte Ansteuer- und Auswertevorrichtung für den mindestens einen HALIOS-Sensor und das wenigstens eine Leuchtmittel angeordnet sein.

Vorteilhaft ist, wenn in den Halbleiterchip ein Mikroprozessor und ein Programmspeicher, in dem ein Betriebsprogramm für den Mikroprozessor abgelegt ist, integriert sind. Die Auswertung des Messsignals des IR-Empfängers und die Ansteuerung der IR-Sender, des Alarmgebers und der Innenleuchte und die Umschaltung der Detektionsreichweite des IR-Bewegungsmelders können dann auf einfache Weise softwaremäßig realisiert werden, so dass für die Doppelnutzung des IR-Bewegungsmelders zum Betätigen der Innenleuchte und zum Detektieren eines Eindringens in den Fahrzeuginnenraum gegenüber einer Innenleuchte mit einer Innenraumüberwachungsvorrichtung, bei welcher der IR-Bewegungsmelder nur für das Detektieren eines Eindringens in den Fahrzeuginnenraum genutzt wird, praktisch kein Hardware-Mehraufwand entsteht.

Bei einer bevorzugten Ausgestaltung der Erfindung sind das Leuchtmittel, die IR-Sender und der IR-Empfänger hinter einer Lichtscheibe angeordnet. Die Innenleuchte ist dadurch noch einfacher ein-/ausschaltbar, wobei der Benutzer zum Betätigen der Innenleuchte nur beispielsweise seine Hand in die Nähe der Lichtscheibe bewegen muss. Außerdem sind das Leuchtmittel, die IR-Sender und der IR-Empfänger hinter der Lichtscheibe vor Verschmutzung oder Beschädigung geschützt.

Bei einer vorteilhaften Ausführungsform der Erfindung weist der IR-Bewegungsmelder mindestens zwei unterschiedlichen Teilbereichen des Fahrzeuginnenraums zugeordnete HALIOS-Sensoren auf, von denen wenigstens einer zusammen mit dem mindestens einen Leuchtmittel an einem vorzugsweise als Leuchtengehäuse ausgebildeten ersten Trägerteil angeordnet ist, und wobei mindestens ein weiterer HALIOS-Sensor an einem zweiten, von dem ersten Trägerteil beabstandeten Trägerteil angeordnet ist. Der IR-Bewegungsmelder kann also einen oder mehrere Satelliten mit zusätzlichen HALIOS-Sensoren aufweisen, wodurch einerseits in dem Überwachungszustand ein Eindringen in den Fahrzeuginnenraum noch besser und zuverlässiger überwacht werden kann und wodurch andererseits in dem Ruhezustand das mindestens eine Leuchtmittel der Innenleuchte wahl- oder wechselweise an mehreren voneinander beabstandeten Betätigungsstellen des Fahrzeuginnenraums betätigt werden kann.

Bei einer zweckmäßigen Ausgestaltung der Erfindung ist in dem Fahrzeuginnenraum eine Anordnung, bestehend aus mindestens zwei der Innenleuchten mit Innenraumüberwachungsvorrichtung vorgesehen, wobei die Ausgangsanschlüsse der IR-Bewegungsmelder der einzelnen Innenraumüberwachungsvorrichtungen mit demselben Alarmgeber verbunden sind. In dem Fahrzeuginnenraum sind also mehrere Innenleuchten vorgesehen, denen jeweils ein HALIOS-Sensor zugeordnet ist, so dass diese Innenleuchten im Ruhezustand der Innenraumüberwachungsvorrichtung unabhängig voneinander betätigt werden können. Die Innenleuchten können beispielsweise ein Front- und eine Fondleuchte umfassen. Im Überwachungszustand wird ein Alarm ausgelöst, wenn mindestens einer der HALIOS-Sensoren ein Eindringen in den Fahrzeuginnenraum detektiert.

Nachfolgend sind Ausführungsbeispiele der Erfindung anhand der Zeichnung näher erläutert. Es zeigen zum Teil stärker schematisiert:
- Fig. 1: einen Längsschnitt durch eine Dachkonsole, in die eine Fahrzeug-Innenleuchte und Komponenten einer Innenraumüberwachungsvorrichtung integriert sind,
- Fig. 2: ein Blockschaltbild einer Innenleuchte mit integrierter Innenraumüberwachungsvorrichtung und
- Fig.3: eine Aufsicht auf ein Kraftfahrzeug, in dessen Innenraum mehrere HALIOS-Sensoren angeordnet sind, deren Detektionsbereiche punktiert umrandet sind.

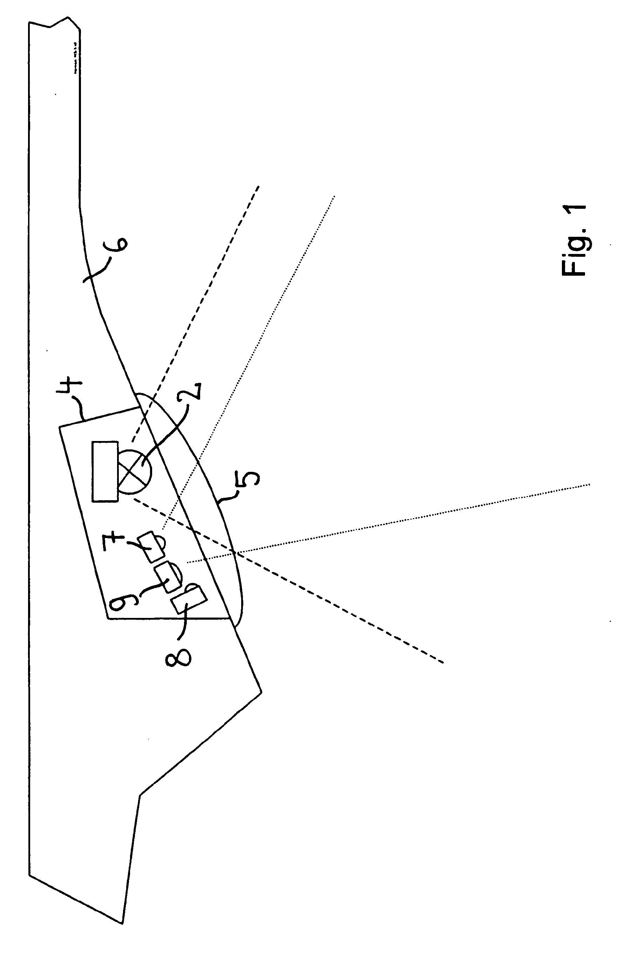

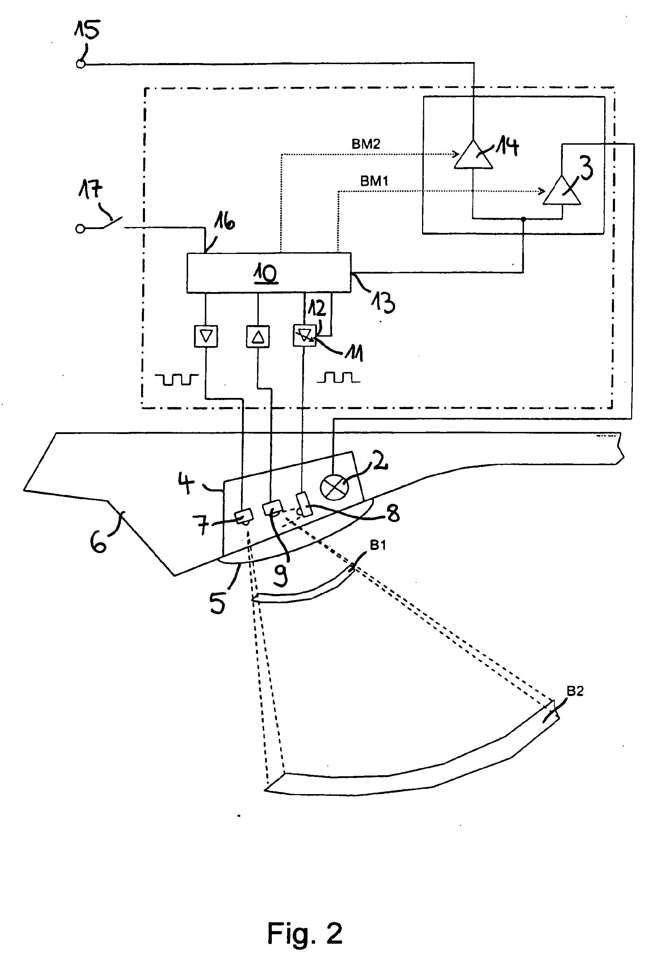

Eine Innenleuchte mit Innenraumüberwachungsvorrichtung für ein Kraftfahrzeug 1 weist ein Leuchtmittel 2 zum Beleuchten des Fahrzeuginnenraums auf, das zum Ein- und Ausschalten des Leuchtmittels 2 über eine Betätigungseinrichtung 3 mit der Stromversorgung (Batterie, Lichtmaschine) des Fahrzeugs 1 verbindbar ist. Bei dem Ausführungsbeispiel gemäß Fig. 1 und 2 ist das Leuchtmittel 2 an einem Trägerteil 4 hinter einer Lichtscheibe 5 angeordnet. Das Trägerteil 4 ist in eine Öffnung einer Dachkonsole 6 eingesetzt.

An dem Trägerteil 4 ist ferner ein IR-Bewegungsmelder zum Überwachen des Fahrzeuginnenraums angeordnet. Der IR-Bewegungsmelder arbeitet nach dem HALIOS-Prinzip und hat zwei IR-Sender 7, 8 und einen diesen zugeordneten IR-Empfänger 9. Ein erster IR-Sender 7 ist zur Abstrahlung von Infrarotstrahlung in den Fahrzeuginnenraum vorgesehen und bezüglich seiner Sendeleistung und seiner Abstrahlcharakteristik derart an den Fahrzeuginnenraum angepasst, dass der IR-Sender 7 einen zu überwachenden Bereich des Fahrzeuginnenraums mit IR-Strahlung bestrahlt. Der IR-Empfänger 9 ist zur Detektion von aus dem Fahrzeuginnenraum zurückreflektierter IR-Strahlung seitlich neben dem ersten IR-Sender 7 angeordnet und weist mit seiner Hauptdetektionsrichtung etwa parallel zu der Richtung, in die der erste IR-Sender 7 hauptsächlich abstrahlt. Ein zweiter IR-Sender 8 ist seitlich neben dem IR-Empfänger 9 angeordnet und mit seiner Hauptabstrahlrichtung derart quer zur Hauptdetektionsrichtung des IR-Empfängers 9 orientiert, dass ein Teil der von dem zweiten IR-Sender 8 ausgesandten Strahlung direkt auf den IR-Empfänger 9 auftrifft.

Die IR-Sender 7, 8 sind mit einer Ansteuer- und Auswerteeinrichtung 10 verbunden, welche die IR-Sender 7 gegenphasig ansteuert. Dabei wird abwechselnd nacheinander jeweils der eine IR-Sender 7 bzw. 8 und dann der andere IR-Sender 8 bzw. 7 für eine vorgegebene Zeitdauer angesteuert. In Fg. 2 ist dies durch um 180° zueinander phasenversetzte Rechtecksignale angedeutet.

In Fig. 2 ist ferner erkennbar, dass die Strahlungsleistung des zweiten IR-Senders 8 mittels eines Stellglieds 11 einstellbar ist. Das Stellglied 11 hat einen mit einem Ausgang der Ansteuer- und Auswerteeinrichtung 10 verbundenen Stelleingang 12, an dem ein Stellsignal anliegt. Das Stellglied 11 ist mit dem IR-Empfänger 9, einem diesem nachgeschalteten Demodulator, einem Vergleichsschaltung zum Subtrahieren der den einzelnen IR-Sendern 7, 8 zugeordneten demodulierten Messsignalanteile und einem Regler in einen Regelkreis geschaltet. Der Demodulator, die Vergleichsschaltung und der Regler sind in der Zeichnung aus Gründen der Übersichtlichkeit nicht näher dargestellt.

Der Regelkreis ist derart ausgebildet, dass beim Auftreten einer Abweichung zwischen den mittleren Amplitudenwerten der den einzelnen IR-Sensoren 7, 8 in dem Messsignal des IR-Empfängers 9 zugeordneten Messsignal-Abschnitten die Ansteuerung des Stellglieds 11 derart verändert wird, dass die Abweichung kompensiert oder zumindest reduziert wird. Die den einzelnen IR-Sensoren 7, 8 zugeordneten Messsignal-Abschnitte weisen also etwa die gleichen mittleren Amplitudenwerte auf, d.h. die Ansteuer- und Auswerteeinrichtung 10 wertet zur Detektion einer Bewegung in dem zu überwachenden Bereich des Fahrzeuginnenraums nur die transienten Regelvorgänge aus. Dadurch ist der HALIOS-Sensor weitestgehend unempfindlich gegen Fremdlicht, insbesondere Sonnenlicht.

Ein Ausgang des Regelkreises ist an einem ersten Eingang einer in der Zeichnung nicht näher dargestellten Vergleichseinrichtung angeschlossen, an deren zweitem Eingang ein Vergleichsignal anlegbar ist. An einem Ausgangsanschluss 13 der Vergleichseinrichtung wird ein Überwachungssignal ausgegeben, das in Abhängigkeit davon, ob das an dem ersten Eingang anliegende Signal innerhalb oder außerhalb eines durch das Vergleichsignal definierten Wertebereichs liegt, aktiv oder inaktiv geschaltet wird.

Der Fahrzeuginnenraum ist an sich bekannter Weise mit Hilfe einer Verriegelungseinrichtung verriegelbar, beispielsweise mittels eines zu einem Türschloss passenden mechanischen Schlüssels und/oder eines mit einer Kennung codierten Infrarot- und/oder Funksignalsenders, der mit einer im Fahrzeug angeordneten Empfangseinrichtung zusammenwirkt, in der eine zu der Kennung des Senders passende Kennung gespeichert ist.

Wenn die Verriegelungseinrichtung verriegelt ist, ist der IR-Bewegungsmelder zur Überwachung eines Eindringens in den Fahrzeuginnenraum nutzbar. Der Ausgangsanschluss 13 der Vergleichseinrichtung ist dazu über einen steuerbaren Treiber 14 mit einem Alarmsignalausgang 15 verbunden, an dem ein in der Zeichnung nicht näher dargestellter Alarmgeber, wie zum Beispiel eine Hupe, eine Beleuchtungseinrichtung und/oder eine Fernanzeige angeschlossen ist.

Die Innenraumüberwachungsvorrichtung hat einen Steuersignaleingang 16, der mit der Verriegelungseinrichtung für den Fahrzeuginnenraum verbunden ist, beispielsweise über einen Schalter 17, der beim Betätigen der Verriegelungseinrichtung seine Schaltstellung ändert. Mit Hilfe des Steuersignaleingangs 16 ist die Innenraumüberwachungsvorrichtung zwischen einem Überwachungszustand, in dem die Ausgabe eines Alarmsignals an den Ausgangsanschluss 13 freigegeben ist, und einem Ruhezustand, in dem die Ausgabe des Alarmsignals gesperrt ist, umschaltbar. Das Sperren des Alarmsignals erfolgt über eine Steuerleitung, die in Fig. 2 mit BM2 bezeichnet ist und den Treiber 14 mit der Ansteuer- und Auswerteeinrichtung 10 verbindet.

Im Ruhezustand lässt sich der IR-Bewegungsmelder zum berührungslosen optischen Betätigen des Leuchtmittels 2 nutzen. Die Detektionsreichweite des IR-Bewegungsmelders ist im Ruhezustand derart gegenüber dem Überwachungszustand reduziert, dass der IR-Bewegungsmelder nur noch Bewegungen detektiert, die in unmittelbarer Nachbarschaft zu dem IR-Empfänger 9 erfolgen. Dies wird dadurch ermöglicht, dass an dem zweiten Eingang der Vergleichseinrichtung Vergleichsignale mit unterschiedlichen Signalpegeln anlegbar sind, wobei der dem Ruhezustand zugeordnete Signalpegel betragsmäßig größer ist als der dem Überwachungszustand zugeordnete Signalpegel.

In Fig. 2 sind die Grenze B1 des im Ruhezustand überwachten Bereichs des Fahrzeuginnenraums und die Grenze B2 des im Überwachungszustand überwachten Bereichs des Fahrzeuginnenraums schematisch angedeutet. Deutlich ist erkennbar, dass die Grenze B2 weiter von dem IR-Empfänger 9 beabstandet ist als die Grenze B1. In Fig. 2 ist ferner erkennbar, dass der IR-Bewegungsmelder im Ruhezustand über einen die Betätigungseinrichtung 3 bildenden steuerbaren zweiten Treiber mit dem Leuchtmittel 2 verbunden ist. Im Überwachungszustand ist die Ansteuerung der Betätigungseinrichtung 3 durch den IR-Bewegungsmelder gesperrt. Die Betätigungseinrichtung 3 ist dazu über eine zweite Steuerleitung BM1 mit der Ansteuer- und Auswerteeinrichtung 10 verbunden.

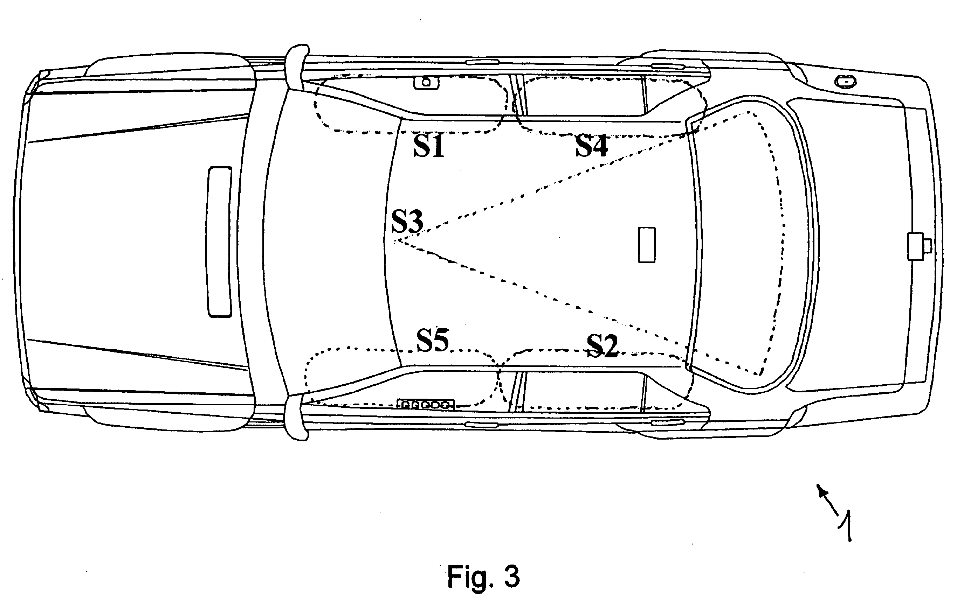

Bei dem in Fig. 3 gezeigten Ausführungsbeispiel weist die Innenraumüberwachungsvorrichtung mehrere im Fahrzeuginnenraum verteilt angeordnete HALIOS-Sensoren auf, die unterschiedliche Teilbereichen S1 bis S5 des Fahrzeuginnenraums überwachen. Deutlich ist erkennbar, dass im Überwachungszustand die Teilbereiche S1, S2, S4 und S5 an den Seitenfenstern und der Teilbereich S3 mittig im Fahrzeuginnenraum angeordnet ist und sich bis zur Heckscheibe erstreckt. Die Ausgänge der einzelnen HALIOS-Sensoren sind über eine Logikschaltung ODERverknüpft, d.h. im Überwachungszustand wird ein Alarm ausgelöst, wenn mindestens ein HALIOS-Sensor ein Eindringen in den Fahrzeuginnenraum meldet. Im Ruhezustand wird die Innenleuchte betätigt, wenn mindestens ein HALIOS-Sensor eine Bewegung in dem ihm zugeordneten, gegenüber dem Überwachungszustand verkleinerten Überwachungsbereich detektiert.

## Patentansprüche

1. Innenleuchte mit Innenraumüberwachungsvorrichtung für Fahrzeuge (1), mit mindestens einem über eine Betätigungseinrichtung (3) mit der Stromversorgung des Fahrzeugs (1) verbindbaren Leuchtmittel (2) zum Beleuchten des Fahrzeuginnenraums und wenigstens einem IR-ßewegungsmelder zum Überwachen des Fahrzeuginnenraums, wobei der IR-Bewegungsmelder einen mit einem Alarmgeber verbundenen Alarmsignalausgang (15) und einen mit einer Verriegelungseinrichtung für den Fahrzeuginnenraum verbundenen Steuersignaleingang (16) aufweist, über den die Innenraumüberwachungsvorrichtung zwischen einem Überwachungszustand, in dem die Ausgabe eines Alarmsignals an den Alarmsignalausgang (15) freigegeben ist, und einem Ruhezustand, in dem die Ausgabe des Alarmsignals gesperrt ist, umschaltbar ist, **dadurch gekennzeichnet, dass** die Innenraumüberwachungsvorrichtung zumindest im Ruhezustand mit der Betätigungseinrichtung (3) für das Leuchtmittel (2) in Steuerverbindung steht, und dass im Ruhezustand die Detektionsreichweite des IR-Bewegungsmelders im Vergleich zum Überwachungszustand derart reduziert ist, dass der IR-Bewegungsmelder zum berührungslosen optischen Betätigen des Leuchtmittels (2) nutzbar ist.

2. Innenleuchte mit Innenraumüberwachungsvorrichtung nach Anspruch 1, **dadurch gekennzeichnet, dass** der IR-Bewegungsmelder mindestens einen HALIOS-Sensor aufweist.

3. Innenleuchte mit Innenraumüberwachungsvorrichtung nach Anspruch 1 oder 2, **dadurch gekennzeichnet, dass** der HALIOS-Sensor mindestens zwei IR-Sender (7, 8) und wenigstens einen diesen zugeordneten IR-Empfänger (9) aufweist, dass die IR-Sender (7, 8) mittels einer Ansteuereinrichtung gegenphasig getaktet ansteuerbar sind, dass die Strahlungsleistung mindestens eines IR-Senders (7, 8) mittels eines Stellglieds (11) einstellbar ist, dass das Stellglied (11) mit dem IR-Empfänger (9) und einem Regler in einen Regelkreis geschaltet ist, der derart ausgebildet ist, dass beim Auftreten einer Abweichung zwischen den mittleren Amplitudenwerten der den einzelnen IR-Sendern (7, 8) in dem Messsignal des IR-Empfängers zugeordneten Abschnitten die Ansteuerung des Stellglieds (11) zur Kompensation der Abweichung verändert wird, dass ein Ausgang des Regelkreises an einem ersten Eingang einer Vergleichseinrichtung angeschlossen ist, dass an einem zweiten Eingang der Vergleichseinrichtung zum Verändern der Detekfionsreichweite der Innenraumüberwachungsvorrichtung mittels einer Umschalteinrichtung unterschiedliche, dem Ruhezustand bzw. dem Überwachungszustand zugeordnete Signalpegel aufweisende Vergleichssignale anlegbar sind, und dass ein Ausgangsanschluss (13) der Vergleichseinrichtung mit der Betätigungseinrichtung (3) und dem Alarmgeber in Steuerverbindung steht.

4. Innenleuchte mit Innenraumüberwachungsvorrichtung nach einem der Ansprüche 1 bis 3, **dadurch gekennzeichnet, dass** die Ansteuereinrichtung derart ausgebildet ist, dass die IR-Sender (7, 8) im Ruhezustand mit einer geringen Sendeleistung betrieben werden als im Überwachungszustand.

5. Innenleuchte mit Innenraumüberwachungsvorrichtung nach einem der Ansprüche 1 bis 4, **dadurch gekennzeichnet, dass** die Betätigungseinrichtung (3) einen Dimmer aufweist, und dass der Dimmer zum berührungslosen Verstellen der Helligkeit des wenigstens einen Leuchtmittels (2) zumindest im Ruhezustand mit dem IR-Bewegungsmelder in Steuerverbindung steht, vorzugsweise derart, dass die Helligkeit des Leuchtmittels (2) in Abhängigkeit vom Abstand zwischen dem IR-Bewegungsmelder und einem innerhalb dessen Detektionsreichweite befindlichen bewegten Objekt, der Änderungsgeschwindigkeit dieses Abstands und/oder von der Verweildauer des Objekts in dem Detektionsbereich eingestellt wird.

6. Innenleuchte mit Innenraumüberwachungsvorrichtung nach einem der Ansprüche 1 bis 5, **dadurch gekennzeichnet, dass** die Ansteuereinrichtung, das Stellglied (11), der Regler und eine Einrichtung zur Umschaltung der Innenraumüberwachungsvorrichtung zwischen dem Ruhe- und dem Überwachungszustand in einen Halbleiterchip integriert sind, insbesondere einen ASIC.

7. Innenleuchte mit Innenraumüberwachungsvorrichtung nach einem der Ansprüche 1 bis 6, **dadurch gekennzeichnet, dass** in den Halbleiterchip ein Mikroprozessor und ein Programmspeicher, in dem ein Betriebsprogramm für den Mikroprozessor abgelegt ist, integriert sind.

8. lnnenleuchte mit Innenraumüberwachungsvorrichtung nach einem der Ansprüche 1 bis 7, **dadurch gekennzeichnet, dass** das Leuchtmittel (2), die IR-Sender (7, 8) und der IR-Empfänger (9) hinter einer Lichtscheibe (5) angeordnet sind.

9. Innenleuchte mit Innenraumüberwachungsvorrichtung nach einem der Ansprüche 1 bis 8, **dadurch gekennzeichnet, dass** der IR-Bewegungsmelder mindestens zwei unterschiedlichen Teilbereichen (S1 .. S5) des Fahrzeuginnenraums zugeordnete HALIOS-Sensoren aufweist, von denen wenigstens einer zusammen mit dem mindestens einen Leuchtmittel (2) an einem vorzugsweise als Leuchtengehäuse ausgebildeten ersten Trägerteil (4) angeordnet ist, und dass mindestens ein weiterer HALIOS-Sensor an einem zweiten, von dem ersten Trägerteil beabstandeten Trägerteil angeordnet ist.

10. Anordnung, bestehend aus mindestens zwei der Innenleuchten mit Innenraumüberwachungsvorrichtung nach einem der Ansprüche 1 bis 9, **dadurch gekennzeichnet, dass** die Ausgangsanschlüsse der IR-Bewegungsmelder der einzelnen Innenraumüberwachungsvorrichtungen mit demselben Alarmgeber verbunden sind.

## Claims

1. Interior light with an interior-monitoring apparatus for vehicles (1), having at least one lighting means (2), which can be connected to the power supply of the vehicle (1) by means of an operating device (3) and serves to illuminate the vehicle interior, and at least one IR motion sensor for monitoring the vehicle interior, with the IR motion sensor having an alarm signal output (15), which is connected to an alarm transmitter, and a control signal input (16) which is connected to a locking device for the vehicle interior and by means of which the interior-monitoring apparatus can be switched between a monitoring state, in which an alarm signal is emitted at the alarm signal output (15), and a quiescent state, in which the alarm signal is blocked, **characterized in that** the interior-monitoring apparatus is connected in control terms to the operating device (3) for the lighting means (2) at least in the quiescent state, and **in that** the detection range of the IR motion sensor is reduced in the quiescent state as compared with the monitoring state in such a way that the IR motion sensor can be used for the purpose of contactless optical operation of the lighting means (2).

2. Interior light with an interior-monitoring apparatus according to Claim 1, **characterized in that** the IR motion sensor has least one HALIOS (High Ambient Light Independent Optical System) sensor.

3. Interior light with an interior-monitoring apparatus according to Claim 1 or 2, **characterized in that** the HALIOS sensor has at least two IR transmitters (7, 8) and at least one IR receiver (9) which is associated with these IR transmitters, **in that** the IR transmitters (7, 8) can be actuated in a manner pulsed in opposite phases by means of an actuating device, **in that** the radiant power of at least one IR transmitter (7, 8) can be set by means of an actuator (11), **in that** the actuator (11) is connected to the IR receiver (9) and a controller in one control loop which is designed in such a way that, when there is a deviation between the average amplitude values of the sections which are associated with the individual IR transmitters (7, 8) in the measurement signal of the IR receiver, the actuator (11) is actuated in a different manner in order to compensate for the deviation, **in that** an output of the control loop is connected to a first input of a comparison device, **in that** different comparison signals, which have a signal level which is associated with the quiescent state or the monitoring state, can be applied to a second input of the comparison device in order to change the detection range of the interior-monitoring apparatus by means of a switch-over device, and **in that** an output connection (13) of the comparison device is connected in control terms to the operating device (3) and the alarm transmitter.

4. Interior light with an interior-monitoring apparatus according to one of Claims 1 to 3, **characterized in that** the actuating device is designed in such a way that the IR transmitters (7, 8) are operated at a lower transmission power in the quiescent state than in the monitoring state.

5. Interior light with an interior-monitoring apparatus according to one of Claims 1 to 4, **characterized in that** the operating device (3) has a dimmer, and **in that** the dimmer is connected in control terms to the IR motion sensor in order to adjust the brightness of the at least one lighting means (2) in a contactless manner at least in the quiescent state, preferably in such a way that the brightness of the lighting means (2) is set as a function of the distance between the IR motion sensor and a moving object located within the detection range of the said IR motion sensor, the rate of change in this distance and/or the dwell time of the object in the detection range.

6. Interior light with an interior-monitoring apparatus according to one of Claims 1 to 5, **characterized in that** the actuating device, the actuator (11), the controller and a device for switching over the interior-monitoring apparatus between the quiescent state and the monitoring state are integrated in a semiconductor chip, in particular an ASIC.

7. Interior light with an interior-monitoring apparatus according to one of Claims 1 to 6, **characterized in that** a microprocessor and a program memory, in which an operating program for the microprocessor is stored, are integrated in the semiconductor chip.

8. Interior light with an interior-monitoring apparatus according to one of Claims 1 to 7, **characterized in that** the lighting means (2), the IR transmitters (7, 8) and the IR receiver (9) are arranged behind a lens (5).

9. Interior light with an interior-monitoring apparatus according to one of Claims 1 to 8, **characterized in that** the IR motion sensor has at least two HALIOS sensors which are associated with different subregions (S1 .. S5) of the vehicle interior, at least one of these HALIOS sensors being arranged on a first support part (4), which is preferably in the form of a lighting housing, together with the at least one lighting means (2), and **in that** at least one further HALIOS sensor is arranged on a second support part which is at a distance from the first support part.

10. Arrangement comprising at least two of the interior lights with an interior-monitoring apparatus according to one of Claims 1 to 9, **characterized in that** the output connections of the IR motion sensors of the individual interior-monitoring apparatuses are connected to the same alarm transmitter.

## Revendications

1. Eclairage intérieur avec dispositif de surveillance intérieure pour véhicules (1), comprenant au moins un moyen d'éclairage (2) pouvant être connecté à l'alimentation électrique du véhicule (1) par le biais d'un dispositif d'actionnement (3), pour l'éclairage de l'intérieur du véhicule et au moins un détecteur de mouvement IR pour surveiller l'intérieur du véhicule, le détecteur de mouvement IR présentant une sortie de signal d'alarme (15) connectée à un dispositif d'alarme et une entrée de signal de commande (16) connectée à un dispositif de verrouillage pour l'intérieur du véhicule, par le biais de laquelle le dispositif de surveillance intérieure peut être commuté entre un état de surveillance dans lequel l'émission d'un signal d'alarme au niveau de la sortie de signal d'alarme (15) est libérée et un état de repos dans lequel la sortie du signal d'alarme est bloquée, **caractérisé en ce que** le dispositif de surveillance intérieure est en liaison de commande au moins dans l'état de repos avec le dispositif d'actionnement (3) pour le moyen d'éclairage (2), et en ce dans l'état de repos, la portée de détection du détecteur de mouvement IR est réduite par comparaison avec l'état de surveillance de telle sorte que le détecteur de mouvement IR puisse être utilisé pour l'actionnement optique sans contact du moyen d'éclairage (2).

2. Eclairage intérieur avec dispositif de surveillance intérieure selon la revendication 1, **caractérisé en ce que** le détecteur de mouvement IR présente au moins un capteur HALIOS.

3. Eclairage intérieur avec dispositif de surveillance intérieure selon la revendication 1 ou 2, **caractérisé en ce que** le capteur HALIOS présente au moins deux émetteurs IR (7, 8) et au moins un récepteur IR (9) associé à ceux-ci, **en ce que** les émetteurs IR (7, 8) peuvent être commandés de manière cadencée en opposition de phase par un dispositif de commande, **en ce que** la puissance du faisceau d'au moins un émetteur IR (7, 8) peut être ajustée au moyen d'un actionneur (11), **en ce que** l'actionneur (11) est branchée avec le récepteur IR (9) et un régulateur dans un circuit de régulation, qui est réalisé de telle sorte qu'à l'apparition d'un écart entre les valeurs d'amplitude moyennes des portions associées aux émetteurs IR individuels (7, 8) dans le signal de mesure du récepteur IR, la commande de l'actionneur (11) est modifiée pour compenser l'écart, **en ce qu'**une sortie du circuit de régulation est raccordée à une première entrée d'un dispositif comparateur, **en ce qu'**à une deuxième entrée du dispositif comparateur, pour modifier la portée de détection du dispositif de surveillance intérieure au moyen d'un dispositif de commutation, des signaux de comparaison présentant différents niveaux de signal associés à l'état de repos ou à l'état de surveillance peuvent être appliqués, et **en ce qu'**un raccord de sortie (13) du dispositif comparateur est en liaison de commande avec le dispositif d'actionnement (3) et le dispositif d'alarme.

4. Eclairage intérieur avec dispositif de surveillance intérieure selon l'une quelconque des revendications 1 à 3, **caractérisé en ce que** le dispositif de commande est réalisé de telle sorte que les émetteurs IR (7, 8) fonctionnent dans l'état de repos avec une puissance d'émission inférieure à celle dans l'état de surveillance.

5. Eclairage intérieur avec dispositif de surveillance intérieure selon l'une quelconque des revendications 1 à 4, **caractérisé en ce que** le dispositif d'actionnement (3) présente un gradateur, et **en ce que** le gradateur est en liaison de commande pour le réglage sans contact de la clarté de l'au moins un moyen d'éclairage (2) au moins dans l'état de repos avec le détecteur de mouvement IR, de préférence de telle sorte que la clarté du moyen d'éclairage (2) soit ajustée en fonction de la distance entre le détecteur de mouvement IR et un objet mobile se trouvant à l'intérieur de sa portée de détection, de la vitesse de variation de cette distance et/ou de la durée de séjour de l'objet dans la plage de détection.

6. Eclairage intérieur avec dispositif de surveillance intérieure selon l'une quelconque des revendications 1 à 5, **caractérisé en ce que** le dispositif de commande, l'actionneur (11), le régulateur et le dispositif de commutation du dispositif de surveillance intérieure entre l'état de repos et l'état de surveillance sont intégrés dans une puce à semi-conducteurs, notamment une puce ASIC.

7. Eclairage intérieur avec dispositif de surveillance intérieure selon l'une quelconque des revendications 1 à 6, **caractérisé en ce qu'**un microprocesseur et une mémoire de programme, dans laquelle est enregistré un programme de fonctionnement pour le microprocesseur, sont intégrés dans la puce à semi-conducteurs.

8. Eclairage intérieur avec dispositif de surveillance intérieure selon l'une quelconque des revendications 1 à 7, **caractérisé en ce que** le moyen d'éclairage (2), les émetteurs IR (7, 8) et le récepteur IR (9) sont disposés derrière un verre de phare (5).

9. Eclairage intérieur avec dispositif de surveillance intérieure selon l'une quelconque des revendications 1 à 8, **caractérisé en ce que** le détecteur de mouvement IR présente au moins deux capteurs HALIOS associés à des régions partielles différentes (S1-S5) de l'intérieur du véhicule, dont au moins un est disposé conjointement avec l'au moins un moyen d'éclairage (2) sur une première partie de support (4) réalisée de préférence sous forme de boîtier d'éclairage, et **en ce qu'**au moins un autre capteur HALIOS est disposé sur une deuxième partie de support espacée de la première partie de support.

10. Agencement constitué d'au moins deux des éclairages intérieurs avec dispositif de surveillance intérieure selon l'une quelconque des revendications 1 à 9, **caractérisé en ce que** les raccords de sortie des détecteurs de mouvement IR des dispositifs de surveillance intérieure individuels sont connectés au même dispositif d'alarme.
